# EUROPEAN PATENT APPLICATION

(11) **EP 2 418 338 A1**
(43) Date of publication of application: **15.02.2012**
(21) Application number: 10172457.3
(22) Date of filing: 11.08.2010
(51) Int. Cl.: E04F 17/04, F16L 9/00, F16L 55/033, F16L 59/147, F24F 13/02

(54) **Method of forming insulated angular duct sections, compatible with an automatic coil line**

(71) Applicant: Armacell Enterprise GmbH, 48153 Münster (DE)
(72) Inventor: Princell, Charles M., Graham, NC 27253 (US); Resetar, Michael J., Hillsborough, NC 27278 (US); Patel, Kartik, Chapel Hill, NC 27516 (US); Liu, Mark, Chapel Hill, NC 27514 (US)
(74) Representative: Hano, Christian

(57) **Abstract**

An angular insulated duct section and method for insulating and forming same is provided. A multi-layer composite sheet (10) is provided, including a first duct layer of sheet metal (12) having two opposed surfaces. On one of the sheet metal surfaces (12) is attached a viscoelastic foam sheet layer (14). The foam sheet layer (14) includes at least one of (A) a viscoelastic open-cell foam layer, or (B) a viscoelastic formally closed-cell foam layer in which at least a portion of closed cells therein has been opened. A substantially linear corner bend is formed in the composite sheet so as to form the angular insulated duct section with the sheet metal layer on an outside thereof and the foam sheet layer on an inside thereof. The corner bend is formed without substantial at least one of distortion or deformation of the multi-layer composite sheet adjacent the bend.

## Description

### BACKGROUND OF THE INVENTION

### Field of the Invention

This invention relates to angular insulated duct sections and methods for insulating the interior of same.

### Description of the Background Art

Current application of thermal and/or acoustic insulation to the surface of metal duct using an automatic coil line (such as manufactured by Iowa Precision Industries, Inc.) is currently limited to highly compressible or formable fiberglass insulation material. Automatic coil lines fabricate and insulate duct sections in a continuous operation. A coil of metal duct material of specific width and gauge is unwound, cut to length, adhesive applied, insulation applied, cut to length, insulation pinned in place, and the composite bent in single or multiple 90 degree angles, forming a duct section. Due to growing concerns over fugitive fibers being introduced into the air stream, the application of fiberglass insulation materials have been restricted to the exterior surface of air handling duct, in applications such as schools, hospitals, and offices.

While insulating the interior surface of the duct with foam insulation is the preferred method of insulating duct, currently available (non-formable) foam insulation products can not be run on an automatic coil line and must be cut to size and applied by hand, resulting in much higher fabrication costs and limited application opportunities.

Prior attempts to replace fiberglass insulation with closed cell elastomer or polymer foam insulation on the automatic coil line have all resulted in failure. Non-formable closed cell foam insulation can not be cut using cutting mechanics available on existing automatic coil lines and the installation of non-formable foam insulation results in unacceptable bend angles, as the force required to compress the closed cell foam distorts and deforms the sheet metal duct at or adjacent the bend location.

There remains a need in the art of duct insulation for the installation of fiber free, formable foam insulation to the interior of ducts usable with low cost automatic coil line fabrication processes.

### SUMMARY OF THE INVENTION

In accordance with the present invention, an angular insulated duct section and method for insulating same is provided. A multi-layer composite sheet is provided, comprising a first duct layer of sheet metal having two opposed surfaces. On one of the sheet metal surfaces is attached a viscoelastic foam sheet layer. The foam sheet layer comprises at least one of (A) a viscoelastic open-cell foam layer, or (B) a viscoelastic formally closed-cell foam layer in which at least a portion of closed cells therein has been opened. A substantially linear corner bend in the composite sheet is formed. The thus formed angular insulated duct section has the sheet metal layer on an outside thereof and the foam sheet layer on an inside thereof. The corner bend is formed without substantial at least one of distortion or deformation of the multi-layer composite sheet adjacent the bend.

### BRIEF DESCRIPTION OF THE DRAWINGS

FIG. 1 is a schematic sectional view of one embodiment showing a multi-layer composite sheet for forming an angular insulated duct section in accordance with the present invention.

FIG. 2 is an schematic end view showing an angular insulated duct section in accordance with one embodiment.

FIG. 3 is a perspective schematic view of the duct section shown in FIG. 2.

FIG. 4 is a schematic end view showing an unacceptably distorted and deformed angular insulated duct section not manufactured in accordance with the present invention.

FIG. 5 is a perspective schematic view of the distorted and deformed section shown in FIG. 4.

### DETAILED DESCRIPTION OF EMBODIMENTS OF THE INVENTION

In accordance with one embodiment of the invention, low density elastomer insulation foam is manufactured in such a way that unique viscoelastic properties are introduced to the insulation foam. These unique properties eliminate the cutting and duct forming and bending problems that currently prevent closed-cell foam insulation from being installed on the interior surface of metal duct sections fabricated using an automatic coil line.

The present invention utilizes sheet metal duct insulation foam material that demonstrates viscoelastic properties. In the certain embodiments, the foam insulation material is low-density. According to one embodiment, the viscoelastic foam materials of the present invention can be applied to sheet metal duct using an automatic coil line.

Viscoelastic foam layers for use in accordance with one embodiment of the present invention have an open-cell foam matrix structure. The open-cell structure can be produced via by any suitable method, such as chemical reaction during extrusion.

In an alternative embodiment, a viscoelastic opened-cell foam layer in accordance with the present invention is formed from a closed-cell foam in which at least a portion of the closed cells are opened, e.g., by mechanically compressing and fracturing the cell walls, resulting in easy passage of air between the fractured opened cells.

The present invention allows the insulation of non-fiber elastomeric or polymeric foams in an angular duct, thereby eliminating the potential for air-born fibers to be introduced into a habitable environment.

The foam layer can be formed from any suitable viscoelastic material for insulating ducts, such as elastomeric foams, thermoplastic foams, thermo-set polymer foams, and the like.

In certain embodiments, viscoelastic open-cell or opened formerly closed-cell type elastomeric or polymeric foams, such as cross-linked foams, are used for the foam insulation layer. Any suitable viscoelastic elastomeric foam materials can be used, including but not limited to, ethylene-propylene (EPDM), nitrile (NBR), styrene-butadiene (SBR), polybutadiene (BR), natural rubber (NR), chloroprene (CR) at least one of butyl and halobutyl (IIR, BIIR, CIIR), silicone (MQ), blends with compatible rubbers, e.g., styrene-butadiene and polybutadiene, and may further include materials such as polyvinyl chloride, such as blends with compatible resins, e.g., nitrile and polyvinyl chloride.

Suitable viscoelastic thermoplastic foams for the insulation layer include cross-linked polyethylene, non-cross-linked polyethylene, polypropylene, polyvinylchloride, polyethylene terephthalate, or polyurethane.

The insulation layer thickness may be, e.g., from about 0.25 inch (6.35 mm) to 5 inches (127 mm). In certain embodiments, the viscoelastic insulation foam layer demonstrates Noise Reduction Coefficient values from 0.6 to 0.9 and/or insulation K value from 0.22 to 0.27 @ 75° f (23.9°C).

The viscoelastic behaviors of foams which are utilized in accordance with the present invention allow the open-cell or opened cell foam to be installed on sheet metal duct using an automatic coil line. Further, the viscoelastic properties accommodate the cutting, pinning and forming mechanics of existing automatic coil lines.

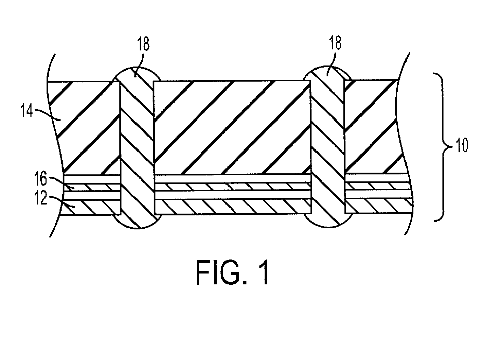

With reference to FIG. 1, a multi-layer composite duct sheet 10 is provided. The multi-layer sheet 10 comprises a first duct layer 12 of sheet metal having two opposed surfaces. In one embodiment, the sheet metal duct layer 12 is formed from aluminum, galvanized steel, tin or a combination thereof. In certain embodiments, the sheet metal layer may have a thickness within a range of about 0.01 inch (0.254 mm) to 0.1 inch (2.54 mm), e.g., about 0.030 inch (0.762 mm).

As can be seen in FIGS. 1-3, on one of the sheet metal surfaces is attached a viscoelastic foam sheet layer 14. As noted above, the viscoelastic foam sheet layer comprises at least one of (A) a viscoelastic open-cell foam layer, or (B) a viscoelastic formerly closed-cell foam layer in which at least a portion of the closed cells therein has been opened.

The foam sheet layer 14 can be attached to a surface of the sheet metal layer by adhesive 16 sandwiched between the foam sheet layer 14 and the sheet metal layer 16, by a plurality of pins 18 extending to the foam sheet layer 14 and the sheet metal layer 12, or by a combination of said adhesive 16 and said pins 18, as shown in FIG. 1. The adhesive may be any suitable adhesive, e.g., acrylic hydrocarbon solvent-based, water-based or the like.

Other suitable adhesives can be used, including flowable adhesives, pressure-sensitive adhesives, contact-adhesives and the like.

In certain embodiments, the adhesive may give off substantially no volatiles. Solvent-based polymer adhesives can be applied and then heated to drive off the solvent volatiles. The volatiles can be reduced to a sufficiently low concentration so that there is substantially no volatile emission at room temperature. To achieve this, the adhesive may be heated for a sufficient time and at a sufficiently high temperature to reduce the volatile content of the adhesive to this level. The volatile content of the adhesive may be less than about 5% by weight of the adhesive, or even less than about 2% by weight of the adhesive.

One adhesive which can be prepared so that it has this low a concentration of volatiles is a self crosslinking acrylic polymer. The solvents used with the acrylic polymer adhesive may be selected from the group consisting of ethyl acetate, isopropanol, toluene, acetone, and mixtures thereof. The polymer may be heated during the curing step of adhesive preparation. While the acrylic is crosslinking the adhesive mixture may be exposed to hot air at high velocity to remove the volatiles.

Crosslinked acrylic polymer adhesive can be obtained commercially (MACtac MP-485 from Mactac).

In certain embodiments, pressure sensitive adhesive can eliminate the need for pinning. Pressure sensitive adhesives can be factory applied as a substantially continuous layer to one side of the viscoelastic foam insulation sheet, and adhesive protected by a release liner. At installation the release liner is removed and the adhesive layer is positioned between the foam sheet layer and the sheet metal layer. Alternatively, strips of adhesive can be used.

As shown in FIGS, 2 and 3, a substantially linear corner bend 20 is formed in the previously described composite sheet 10, so as to form the angular insulated duct section of the invention with the sheet metal layer 12 on an outside thereof, and the foam sheet layer 14 on an inside thereof. In accordance with the present invention, the corner bend 20 is formed without substantial at least one of distortion or deformation of the multi-layer composite sheet at or adjacent the location of the bend 20.

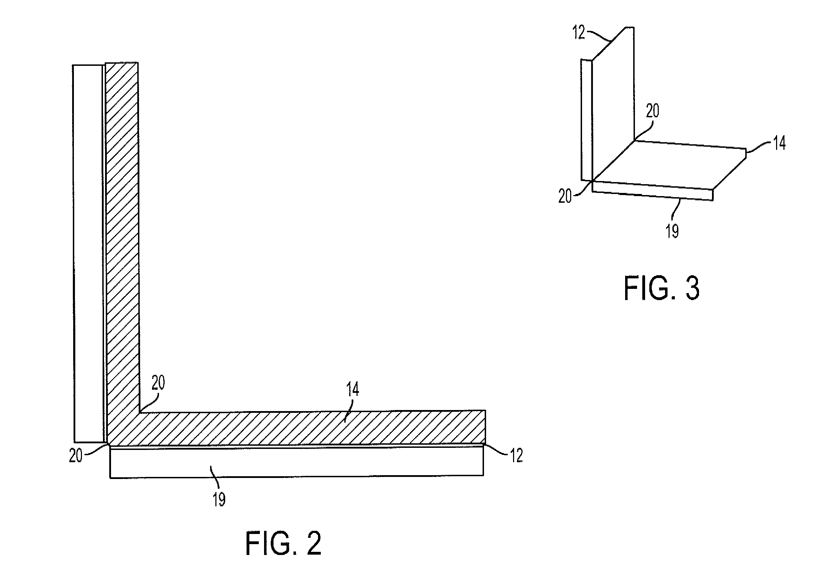

FIGS. 2 and 3 also show an angled metal flange face 19 formed at the end of a duct section.

In accordance with one embodiment, an adhesive 16 is applied to one surface of the provided sheet metal layer 12. The foam sheet layer is applied to the adhesive on the sheet metal layer and the foam sheet layer is pinned to the sheet metal layer with pins 18, with the adhesive sandwiched between the foam sheet layer and the sheet metal layer. A corner bend 20 then is formed in the thus-formed multi-layer composite sheet, as described above.

Alternatively, adhesive can be applied first to one side of the foam sheet layer 14, after which the foam sheet layer 14 is applied to the sheet metal layer 12 with the adhesive sandwiched therebetween.

One method of the present invention comprises a continuous process in which the sheet layer is provided by unwinding a coil of sheet metal and applying adhesive to one surface of the sheet metal layer. The foam layer then is applied to the adhesive on the sheet metal layer and the foam sheet layer is pinned to the sheet metal layer as described above, to form the multi-layer composite sheet. The multi-layer composite sheet then is cut to a predetermined length, and the corner bend then is formed.

Alternatively, adhesive can be applied first to one side of the foam sheet layer 14, after which the foam sheet layer 14 is applied to the sheet metal layer 12 with the adhesive sandwiched therebetween.

In preferred embodiments, the corner bend is at an angle of about 90°.

The invention also is applicable to an angular insulated duct section formed as described above, for example, by an automatic coil line apparatus.

FIGS. 2 and 3 show that open-cell or opened-cell (viscoelastic) foam insulation can be installed on metal duct by an automatic coil line, as the foam is formable or collapsable and allows the metal duct to be formed at a 90° angle without distorting or deforming the duct section at or adjacent the bend location 20.

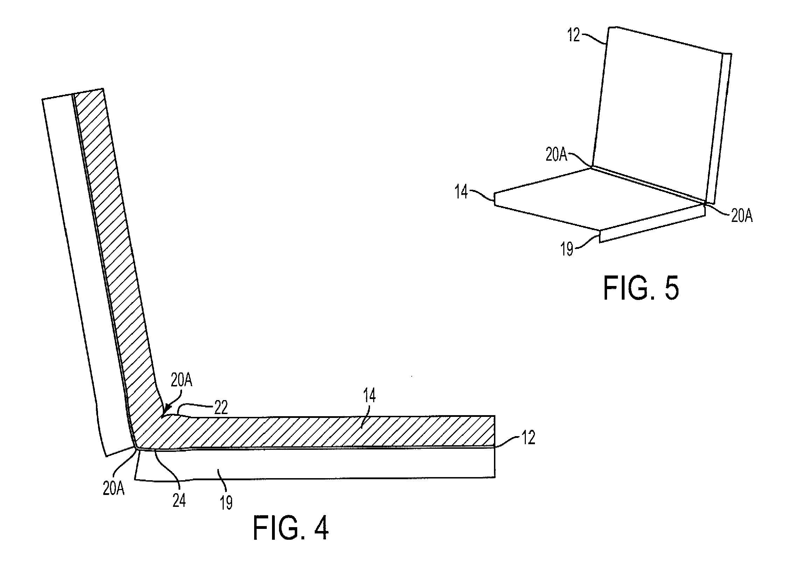

FIGS. 4 and 5 show that closed-cell foam insulation can not be installed by an automatic coil line, as closed-cell foam insulation is not collapsible and the force required to displace the closed-cell foam, during the bending process, results in an unacceptable bend angle (angles greater than 90°). Further, the closed-cell foam volume displacement distorts 22 and deforms 24 the duct at or adjacent the bend location 20A resulting in an unacceptable duct cross section.

While the composite duct sheet structure 10 of FIG. 1 only shows one sheet metal layer 12, one insulation layer 14 and one adhesive layer 16, additional layers and coatings may be included in the composite insulation structure.

In describing the invention, certain embodiments have been used to describe the invention. However, the invention is not limited to these embodiments as other embodiments of the present invention will readily occur to those skilled in the art after reading this specification.

## Claims

1. A method of insulating and forming an angular duct section, comprising providing a multi-layer composite duct sheet comprising a first layer of sheet metal having two opposed surfaces, on one of the sheet metal surfaces to which is attached a viscoelastic foam sheet layer, the foam sheet layer comprising at least one of (A) a viscoelastic open-cell foam layer, or (B) a viscoelastic formerly closed-cell foam layer in which at least a portion of closed cells therein has been opened; and forming a substantially linear corner bend in the composite sheet so as to form the angular insulated duct section with the sheet metal layer on an outside thereof and the foam sheet layer on an inside thereof, wherein said corner bend is formed without at least one of substantial distortion or substantial deformation of the multi-layer composite sheet adjacent said bend.

2. The method of claim 1, wherein the foam sheet layer is attached to one surface of said sheet metal layer by adhesive sandwiched between the foam sheet layer and the sheet metal layer, by a plurality of pins extending through the foam sheet layer and the sheet metal layer, or by a combination of said adhesive and said pins.

3. The method of claim 2, comprising providing the sheet metal layer, applying adhesive to one surface of the sheet metal layer, applying the foam sheet layer to the adhesive on the sheet metal layer, pinning the foam sheet layer to the sheet metal layer with said pins, and with said adhesive between the foam sheet layer and the sheet metal layer so as to form the multi-layer composite sheet, and then forming said corner bend in said composite sheet.

4. The method of claim 3, comprising a continuous process in which the sheet metal layer is provided by unwinding a coil of sheet metal, the adhesive is applied to said one surface of the sheet metal layer, said foam layer is applied to the adhesive on the sheet metal layer, said foam sheet layer is pinned to the sheet metal layer to form the multi-layer composite, and then said corner bend is formed in the multi-layer composite.

5. The method of claim 4, wherein said corner bend is at about a 90°.

6. The method of claim 1, wherein said foam layer comprises elastomeric foam, thermo plastic foam, or thermo-set polymer foam.

7. The method of claim 1, wherein said viscoelastic foam is cross-linked.

8. The method of claim 1, wherein said viscoelastic foam is of open-cell type.

9. The method of claim 1, wherein said viscoelastic foam comprises Ethylene-propylene (EPDM), Nitrile (NBR), Styrene-butadiene (SBR), Polybutadiene (BR), Natural rubber (NR), Chloroprene (CR), at least one of Butyl and Halobutyl (IIR, BIIR, CIIR), Silicone (MQ) or a combination thereof.

10. The method of claim 9, wherein said foam further comprises polyvinyl chloride.

11. The method of claim 1, wherein said viscoelastic foam comprises cross-linked polyethylene, non-cross-linked polyethylene, polypropylene, polyvinylchloride, polyethylene terephthalate, or polyurethane.

12. The method of claim 1, wherein said sheet metal comprises aluminum, steel, tin or a combination thereof.

13. The method of claim 1, wherein said foam layer has a thickness of about 0.25 inch (6.35 mm) to about 5 inches (127 mm).

14. An insulated duct section formed according to the method of one of claims 1 to 13.
